# EUROPÄISCHE PATENTANMELDUNG

(11) **EP 1 283 334 A1**
(43) Veröffentlichungstag der Anmeldung: **12.02.2003**
(21) Anmeldenummer: 02017289.6
(22) Anmeldetag: 01.08.2002
(51) Int. Cl.: F01P 11/02, F01P 7/16

(54) **Kühlsystem für Kraftfahrzeugantriebe**

(30) Priorität: 09.08.2001 DE 10139314
(71) Anmelder: DEERE & COMPANY, Moline, Illinois 61265-8098 (US)
(72) Erfinder: Hudson, Scott A., Cedar Falls, IA 50613 (US); Bobertag, Hartmut, 67122 Altrip (DE); Stark, Waldemar, 67227 Frankenthal (DE)
(74) Vertreter: Lau-Loskill, Philipp, Dipl.-Phys.

(57) **Zusammenfassung**

Es wird ein Kühlsystem für Kraftfahrzeugantriebe beschrieben, welches einen Motorkühlkreis (10), in dem eine Motorkreis-Kühlmittelpumpe (20) das Kühlmittel wenigstens durch ein Motorkühlsystem (14) und einen Motorkreis-Wärmetauscher (16) pumpt, und welches wenigstens einen separaten Ladeluftkühlkreis (12), in dem eine Ladeluftkreis-Kühlmittelpumpe (26) das Kühlmittel durch wenigstens einen Ladeluftkühler (28) und einen Ladeluftkreis-Wärmetauscher (32) pumpt, aufweist. Die beiden Kühlkreise (10, 12) stehen mit einem gemeinsamen Flüssigkeitsbehälter in Verbindung.

Um bei einem Kühlsystem mit zwei separaten Kühlkreisen (10, 12) lediglich wenige Füllorte vorsehen zu müssen, wird vorgeschlagen, dass der Flüssigkeitsbehälter ein gemeinsamer Expansionsbehälter (36) ist und dass von jedem Kühlkreis (10, 12) wenigstens eine Entlüftungsleitung (50, 52) abzweigt, die in einen oberen Bereich des Expansionsbehälters (36) mündet.

## Beschreibung

Die Erfindung betrifft ein Kühlsystem für Kraftfahrzeugantriebe mit einem Motorkühlkreis, in dem eine Motorkreis-Kühlmittelpumpe ein Kühlmittel wenigstens durch ein Motorkühlsystem und einen Motorkreis-Wärmetauscher pumpt, und mit wenigstens einem separaten Ladeluftkühlkreis, in dem eine Ladeluftkreis-Kühlmittelpumpe ein Kühlmittel durch wenigstens einen Ladeluftkühler und einen Ladeluftkreis-Wärmetauscher pumpt. Die beiden Kühlkreise stehen mit einem gemeinsamen Flüssigkeitsbehälter in Verbindung.

Durch die DE 199 56 893 A1 ist ein Kühlkreis für einen Verbrennungsmotor bekannt geworden, bei dem eine Kühlmittelpumpe ein Kühlmedium in einem Kreis, in dem im wesentlichen der Verbrennungsmotor, ein Thermostatventil und ein Hauptwärmetauscher liegen, umpumpt. Eine Motorabführleitung ist über eine erste Entlüftungsleitung mit einem Ausgleichsbehälter verbunden, der Wärmeausdehnungseffekte des Kühlmediums sowie kleinere Leckagen ausgleicht. Des weiteren sind eine zweite und eine dritte Entlüftungsleitung vorgesehen, die andere Stellen des Kühlkreises mit dem Ausgleichsbehälter verbinden, indem sie jeweils über Drosseln in den Ausgleichsbehälter münden. Am Boden des Ausgleichsbehälters ist eine Auffüllleitung angeschlossen, die mit einer Motorzuführleitung kommuniziert. Ein Ladeluftkühlkreis wird in der DE 199 56 893 A1 nicht erwähnt, so dass damit zusammenhängende Probleme dieser Druckschrift nicht entnommen werden können.

Sofern mehrere separate Kühlkreise vorgesehen sind, werden üblicherweise mehrere den Kühlkreisen zugeordnete Ausgleichsbehälter verwendet, um die Kühlkreise voneinander getrennt halten zu können. Dies erfordert jedoch mehrere Einfüllpositionen zum Auffüllen und Nachfüllen von Kühlflüssigkeit, was einen zusätzlichen Aufwand beim Befüllen und für die laufende Kontrolle des Füllstands in den Kühlkreisen erfordert.

Ein Kühlsystem der eingangs genannten Art geht aus der US-5,598,705 hervor, in der zwei separate Kühlkreise beschrieben werden. Jeder der Kühlkreise ist voll funktionsfähig und arbeitet unabhängig von dem jeweils anderen Kühlkreis. Dadurch kann eine Vermischung des Kühlmittels der beiden Kreise vermieden werden und im Ladeluftkühlkreis eine tiefere Temperatur aufrechterhalten werden als im Motorkühlkreis. Die beiden Kühlkreise sind an einen gemeinsamen Kühlmittelbehälter angeschlossen, was einen Ausgleichsstrom zwischen den beiden Kreisen ermöglicht. Es werden Verbindungsleitungen zwischen den beiden Kreisen beschrieben, in denen Ventile angeordnet sind. Durch Öffnen des Ventils lassen sich die Kühlmittelströme in den beiden Kühlkreisen miteinander vermischen, um zu hohe Temperaturen im Motorkühlkreis zu vermeiden bzw. um dem Einfrieren von Kühlflüssigkeit im Ladeluftkühlkreis vorzubeugen.

Die der Erfindung zugrunde liegende Aufgabe wird darin gesehen, ein Kühlsystem der eingangs genannten Art anzugeben, durch welches die vorgenannten Probleme überwunden werden. Insbesondere sollen möglichst wenige Ausgleichsbehälter und Füllorte bei einem Kühlsystem mit zwei separaten Kühlkreisen erforderlich sein.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Das erfindungsgemäße Kühlsystem enthält wenigstens zwei getrennte Kühlkreise, und zwar einen Motorkühlkreis, in welchem eine Motorkreis-Kühlmittelpumpe ein Kühlmittel wenigstens durch ein Motorkühlsystem und einen Motorkreis-Wärmetauscher fördert, und einen Ladeluftkühlkreis, in dem eine Ladeluftkreis-Kühlmittelpumpe ein Kühlmittel durch wenigstens einen Ladeluftkühler und einen Ladeluftkreis-Wärmetauscher fördert. Die beiden Kühlkreise stehen mit einem gemeinsamen Flüssigkeitsbehälter in Verbindung, welcher als Expansionsbehälter ausgebildet ist. Von jedem Kühlkreis zweigt wenigstens eine Entlüftungsleitung ab, die in den Expansionsbehälter mündet.

Durch die Verwendung eines einzigen Expansionsbehälters können Druckschwankungen, Wärmeausdehnungseffekte sowie kleiner Leckagen in und zwischen den Kühlkreisen ausgeglichen werden. Die Einleitung der beiden Entlüftungs- oder Gasabscheideleitungen in lediglich einen Expansionsbehälter ermöglicht einen Druckausgleich zwischen den beiden Kühlkreisen. Durch die Erfindung wurde somit ein Weg gefunden, der es ermöglicht, für die Kühlmittelausdehnung und Entlüftung in beiden ansonsten separaten Kühlkreisen lediglich einen Expansionsbehälter zu verwenden. Dabei ist lediglich ein Füllort für das Nachfüllen der Kühlmediums erforderlich, indem der Expansionsbehälter eine einzige Nachfüllöffnung aufweist, die üblicherweise durch einen Verschlussdeckel verschlossen ist.

Bei der Motorkreis-Kühlmittelpumpe handelt es sich zweckmäßigerweise um eine mechanisch von dem Verbrennungsmotor angetriebenen Pumpe, die unmittelbar am Motorblock befestigt und an diesen angepasst ist. Das Kühlmittel im Motorkühlkreis nimmt im Normalbetrieb eine relativ hohe Temperatur ein, so dass der Motorkreis-Wärmetauscher vorzugsweise als Hochtemperatur-Wärmetauscher ausgelegt ist. Die Temperatur im Ladeluftkühlkreis ist hingegen wesentlich geringer, so dass der Ladeluftkreis-Wärmetauscher vorzugsweise als Niedertemperatur-Wärmetauscher ausgelegt wird.

Der Ladeluftkühler dient der Abkühlung der durch einen Turbolader geförderten Verbrennungsluft für den Verbrennungsmotor. Die Verwendung von kühlmittelgekühlten Ladeluftkühlern hat gegenüber luftgekühlten Ladeluftkühlern den Vorteil der Raumeinsparungen. Dies liegt daran, dass wassergekühlte Ladeluftkühler an nahezu beliebiger Stelle im Motorraum untergebracht werden können und dass sie wesentlich kleiner sind als luftgekühlte Ladeluftkühler.

Die im Motorkreis aufzubringende Kühlleistung ist im allgemeinen wesentlich größer als die des Ladeluftkühlkreises. Es ist daher von Vorteil, die beiden Kühlkreise derart auszulegen, dass die Durchflussmenge in dem Motorkühlkreis um ein vielfaches größer ist als die Durchflussmenge in dem Ladeluftkühlkreis. Beispielsweise ist die Durchflussmenge im Motorkühlkreis um ein 5-faches bis 10-faches größer als die Durchflussmenge im Ladeluftkühlkreis.

Vorzugsweise sind in wenigstens einer der sich zwischen den beiden Kühlkreisen und dem Expansionsbehälter erstreckenden Entlüftungsleitungen Mittel zur Begrenzung der Durchströmmenge bzw. des Durchsatzes vorgesehen. Es handelt sich hierbei beispielsweise um eine Drosselstelle, die den Durchstrom drosselt, so dass lediglich 1 bis maximal 5 % der in den Kühlkreisen zirkulierenden Flüssigkeitsmenge durchtreten kann. Durch die Durchflussbegrenzungen wird ein Flüssigkeitsaustausch zwischen den beiden Kühlkreisen weitestgehend unterbunden, so dass trotz des gemeinsamen Expansionsbehälters beide Kühlkreise flüssigkeitsmäßig getrennt voneinander bleiben.

Da der Motorkühlkreis üblicherweise einen größeren Durchsatz hat als der Ladeluftkühlkreis, fällt im Motorkühlkreis mehr Entlüftungsluft an als im Ladeluftkreis. Daher ist es von Vorteil, die Entlüftungsleitung des Motorkühlkreises für einen größeren Durchsatz auszulegen als die Entlüftungsleitung des Ladeluftkühlkreises. Eine bevorzugte Weiterbildung der Erfindung sieht hierfür vor, dass der Durchstrom in der zum Ladeluftkühlkreis führenden Entlüftungsleitung stärker gedrosselt ist als der Durchstrom in der zum Motorkühlkreis führenden Entlüftungsleitung. Beispielsweise wird in der zum Ladeluftkühlkreis führenden Entlüftungsleitung eine Drossel, deren Querschnitt einem Kreisdurchmesser von 3 mm entspricht, und in der zum Motorkühlkreis führenden Entlüftungsleitung eine Drossel, deren Querschnitt einem Kreisdurchmesser von 6 mm entspricht, verwendet.

Als Ladeluftkreis-Wärmetauscher wird vorzugsweise ein luftgekühlter Niedertemperatur-Wärmetauscher mit mehreren Pfaden verwendet. Dabei enthält der Wärmetauscher mehrere Kammern, die nacheinander durchströmt werden. Es ergeben sich somit lange Strömungswege, die bei relativ geringer Flüssigkeitsmenge eine Abkühlung auf niedrige Ausgangstemperaturen ermöglichen. Beispielsweise kühlt der Ladeluftkreis-Wärmetauscher im Normalbetrieb das Kühlmittel von ca. 93°C auf ca. 45°C herunter. Bei dem Wärmetauscher handelt es sich um einen sogenannten Superkühler. Bei üblichen Wärmetauschern erfolgt eine Abkühlung um 5°C. Der Superkühler ermöglicht hingegen ein Herunterkühlen um bis zu 50°C.

Eine vorteilhafte Weiterbildung der Erfindung sieht vor, dass in den unteren Flüssigkeitssammelbereich des gemeinsamen Expansionsbehälters wenigstens eine Füllleitung mündet, die mit den beiden Kühlkreisen in Verbindung steht. Der Expansionsbehälter dient damit der Aufnahme und Abgabe von Kühlflüssigkeit an die beiden Kühlkreise. Durch den Expansionsbehälter können beide Kühlkreise mit Kühlmittel versorgt werden. Insbesondere erfolgt ein Nachfüllen der Kühlkreise mit Kühlmittel, um Flüssigkeitsverluste infolge von Leckagen auszugleichen. Die Füllleitungen münden in einem unteren Bereich des Expansionsbehälter, der unterhalb des Flüssigkeitsspiegels liegt.

Einer besonders bevorzugten Weiterbildung der Erfindung zur Folge ist in den Ladeluftkühlkreis ein Ölkühler integriert. Es handelt sich hierbei vorzugsweise um einen Getriebeölkühler, der das Getriebeöl eines Automatikgetriebes oder eines Lastschaltgetriebes für ein Arbeitsfahrzeug, beispielsweise eines Ackerschleppers, herunterkühlt. Gemäß einer bevorzugten Ausgestaltung der Erfindung sind in dem Ladeluftkühlkreis hintereinander die Ladeluftkreis-Kühlmittelpumpe, der Ladeluftkühler, ein Getriebeölkühler, gegebenenfalls weitere Kühler und schließlich der Ladeluftkreis-Wärmetauscher angeordnet. Da hierbei die Kühlmittelpumpe dem Wärmetauscher nachgeordnet ist, wird sie von abgekühlter Kühlflüssigkeit durchströmt und ist einer relativ geringen Temperaturbelastung ausgesetzt, was sich vorteilhaft auf den Betrieb und die Lebensdauer der Kühlmittelpumpe auswirkt. Der Ladeluftkühler wird unmittelbar von dem durch den Wärmetauscher heruntergekühlten Kühlflüssigkeit durchströmt, wodurch sich die Kühlleistung des Ladeluftkühlers optimieren lässt.

Insbesondere bei der zuletzt genannten Ausgestaltung ist es vorteilhaft als Ladeluftkreis-Kühlmittelpumpe eine elektrisch angetriebene Pumpe zu verwenden, die unabhängig von dem Betrieb des Verbrennungsmotors in Gang gesetzt werden kann. Die unmittelbar dem Wärmetauscher nachgeordnete elektrische Pumpe wird mit relativ kühlem Kühlmittel beaufschlagt, was eine hohe Lebensdauer ermöglicht.

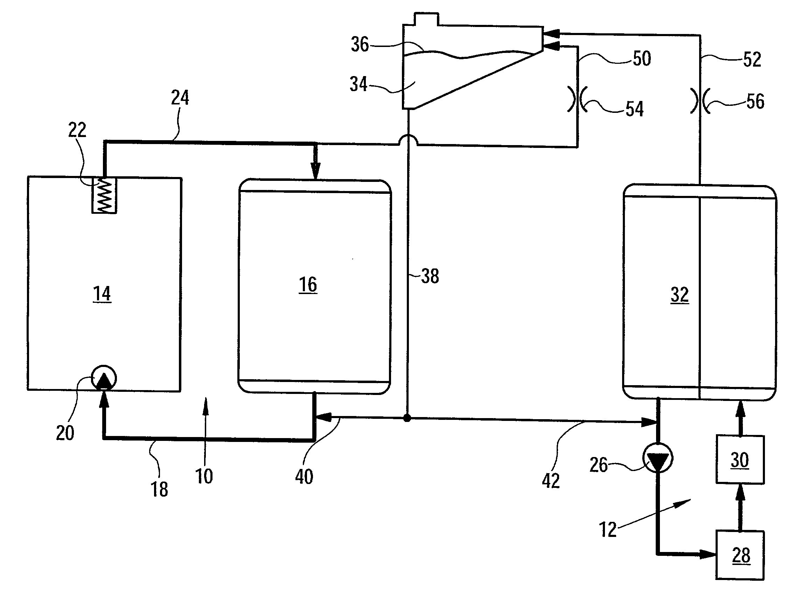

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Die einzige Figur zeigt die schematische Darstellung eines erfindungsgemäßen Kühlsystems mit zwei getrennten Kühlkreisen und zwar einem Motorkühlkreis 10 und einem Ladeluftkühlkreis 12.

Im Motorkühlkreis 10 liegt das nicht näher dargestellte Motorkühlsystem eines Verbrennungsmotors 14, dass der Kühlung des Motorblocks und der Zylinderköpfe dient, sowie ein Motorkreis-Wärmetauscher 16. Bei dem Motorkreis-Wärmetauscher 16 handelt es sich um einen üblichen Hochtemperatur-Wärmetauscher. Das in dem Motorkreiswärmetauscher 16 abgekühlte Kühlmedium wird über eine Rückführleitung 18 von einer Motorkreis-Kühlmittelpumpe 20 in das Kühlsystem des Verbrennungsmotors 10 gepumpt, um dessen Motorblock und Zylinderköpfe zu kühlen. An der Austrittseite des Verbrennungsmotors 10 befindet sich ein Thermostatventil 22. Bei geöffnetem Thermostatventil 22 fließt das Kühlmedium über eine Vorlaufleitung 24 zum Motorkreis-Wärmetauscher 16.

Beim Starten des Verbrennungsmotors ist der Motorblock kalt und das Thermostatventil 22 geschlossen, so dass das Kühlmedium durch die Kühlmittelpumpe 20 in einem kleinen Kreis durch den Verbrennungsmotor 10 und eine nicht näher gezeigte Bypassleitung umgepumpt wird. Oberhalb von 83°C beginnt das Thermostatventil 22 zu öffnen, so dass mit steigender Temperatur eine zunehmende Flüssigkeitsmenge durch den Motorkreis-Wärmetauscher 16 fließt und durch diesen gekühlt wird. Mit Überschreiten von ca. 90°C wird die Bypassleitung vollständig geschlossen, so dass das gesamte umgepumpte Kühlmedium durch den Motorkreis-Wärmetauscher 16 fließt und gekühlt wird.

Im Ladeluftkühlkreis 12 sind eine Ladeluftkreis-Kühlmittelpumpe 26, ein Ladeluftkühler 28, ein Getriebeölkühler 30 und ein Ladeluftkreis-Wärmetauscher 32 in Serie angeordnet. In diesem Kühlkreis wird das Kühlmedium von der Ladeluftkreis-Kühlmittelpumpe 26 zunächst durch den Ladeluftkühler 28, den Getriebeölkühler 30 und dann durch den Ladeluft-Wärmetauscher 32 gepumpt, bis es schließlich wieder dem Eingang der Ladeluft-Kühlmittelpumpe 26 zugeführt wird. Die Ladeluftkreis-Kühlmittelpumpe 26 ist unmittelbar hinter dem Ladeluftkreis-Wärmetauscher 32 angeordnet und befindet sich damit an der kühlsten Stelle im Ladeluftkühlkreis 12. Die Ladeluftkreis-Kühlmittelpumpe 26 wird elektrisch angetrieben.

Der Ladeluftkreis-Wärmetauscher 32 ist als Superkühler ausgelegt. Er liegt an einer Stelle im Ladeluftkühlkreis, an welcher der niedrigste Druck herrscht. Dies liegt daran, dass durch die Strömungswiderstände des Ladeluftkühlers 28 und des Getriebeölkühlers 30 eine Druckreduzierung des Pumpenausgangsdrucks erfolgt.

Die beiden Wärmetauscher 16, 32 sind vorzugsweise räumlich hintereinander angeordnet und werden durch einen Lüfter gekühlt, der Frischluft durch die Wärmetauscher 20, 32 bläst, was jedoch nicht näher dargestellt wurde. Die beiden Kühlkreise 10, 12 und Kühlmittelpumpen 20, 26 sind derart ausgelegt, dass die Kühlmittel-Durchflussmenge im Motorkühlkreis 10 um einen Faktor von fünf bis zehn höher ist als die Durchflussmenge im Ladeluftkühlerkreis 12.

Es ist ein Expansionsbehälter 34 vorgesehen, der bis zu einem Flüssigkeitsspiegel 36 mit Kühlflüssigkeit gefüllt ist. Im unteren Bereich des Expansionsbehälters mündet eine Füllleitung 38. Die Füllleitung 38 verzweigt sich in zwei Teilleitungen 40, 42, welche im Bereich der Saugseite der Motorkreis-Kühlmittelpumpe 20 an den Motorkühlkreis 20 bzw. im Bereich der Saugseite der Ladeluftkreis-Kühlmittelpumpe 26 an den Ladeluftkühlkreis 12 angeschlossen sind.

Im oberen Bereich des Expansionsbehälters 36 münden zwei Entlüftungsleitungen 50, 52. Die Mündungsstellen dieser Leitungen 50, 52 liegen oberhalb des Flüssigkeitsspiegels 36. Die beiden Entlüftungsleitungen 50, 52 können im Mündungsbereich als zwei konzentrisch zueinander angeordnete Rohre ausgelegt sein, so die nach Art eines Ejektors wirken.

Die erste Entlüftungsleitung 50 verbindet den Expansionsbehälter 34 mit der Vorlaufleitung 24 des Motorkühlkreises, durch welche die Kühlflüssigkeit des Motorkühlkreises 10 in den Motorkreis-Wärmetauscher 16 fließt. Die zweite Entlüftungsleitung 52 verbindet den Expansionsbehälter 34 mit einer Anschlussstelle des Ladeluftkühlkreises 12, die im Bereich des Ladeluftkreis-Wärmetauschers 32 liegt.

In jeder der beiden Entlüftungsleitungen 50, 52 befindet sich eine Drosselstelle 54, 56, durch die der Durchfluss eines Gas-Flüssigkeits-Gemisches begrenzt wird. Die Drosselstellen 54, 56 sind derart ausgelegt, dass sie lediglich einen Durchfluss zulassen, der 1 bis 5 % der in dem zugehörigen Kühlkreis zirkulierenden Flüssigkeitsmenge zulassen. Da die im Ladeluftkühlkreis 12 zirkulierende Flüssigkeitsmenge geringer ist als die im Motorkühlkreis 10 zirkulierende Flüssigkeitsmenge werden auch die Drosselstellen 54, 56 in den beiden Entlüftungsleitungen 50, 52 unterschiedlich ausgelegt. Der Durchfluss in der zum Ladeluftkühlkreis 12 führenden Entlüftungsleitung 52 wird stärker begrenzt als der Durchfluss in der zum Motorkühlkreis 10 führenden Entlüftungsleitung 50.

Es ist ersichtlich, dass die beiden Kühlkreise 10, 12 im wesentlichen voneinander getrennt sind, so dass sich die in den beiden Kühlkreisen 10, 12 umgewälzten Flüssigkeitsströme gegenseitig nicht beeinflussen. Es findet keine nennenswerte Vermischung der relativ warmen Flüssigkeit im Motorkühlkreis 10 mit der relativ kühlen Flüssigkeit im Ladeluftkühlkreis 12 statt, da die Füllleitung 38 und die Entlüftungsleitungen 50, 52 keinen nennenswerten Flüssigkeitsaustausch zwischen den beiden Kühlkreisen 10, 12 erlauben.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen.

## Patentansprüche

1. Kühlsystem für Kraftfahrzeugantriebe mit einem Motorkühlkreis (10), in dem eine Motorkreis-Kühlmittelpumpe (20) ein Kühlmittel wenigstens durch ein Motorkühlsystem (14) und einen Motorkreis-Wärmetauscher (16) pumpt, und mit wenigstens einem separaten Ladeluftkühlkreis (12), in dem eine Ladeluftkreis-Kühlmittelpumpe (26) ein Kühlmittel durch wenigstens einen Ladeluftkühler (28) und einen Ladeluftkreis-Wärmetauscher (32) pumpt, wobei die beiden Kühlkreise (10, 12) mit einem gemeinsamen Flüssigkeitsbehälter in Verbindung stehen, **dadurch gekennzeichnet, dass** der Flüssigkeitsbehälter ein gemeinsamer Expansionsbehälter (36) ist und dass von jedem Kühlkreis (10, 12) wenigstens eine Entlüftungsleitung (50, 52) abzweigt, die in einen oberen Bereich des Expansionsbehälters (36) mündet.

2. Kühlsystem nach Anspruch 1, **dadurch gekennzeichnet, dass** die beiden Kühlkreise (10, 12) derart ausgelegt sind, dass die Durchflussmenge in dem Motorkühlkreis (10) um ein vielfaches größer ist als die Durchflussmenge in dem Ladeluftkühlkreis (12).

3. Kühlsystem nach Anspruch 1 oder 2, **dadurch gekennzeichnet, dass** in wenigstens einer der beiden Entlüftungsleitungen (50, 52) Mittel (54, 56) zur Begrenzung der Durchströmmenge zwischen den Kühlkreisen (10, 12) und dem Expansionsbehälter (36) vorgesehen sind.

4. Kühlsystem nach einem der vorhergehenden Ansprüche, **dadurch gekennzeichnet, dass** der Durchstrom in der zum Ladeluftkühlkreis (12) führenden Entlüftungsleitung (52) stärker gedrosselt ist als der Durchstrom in der zum Motorkühlkreis (10) führenden Entlüftungsleitung (50).

5. Kühlsystem nach einem der vorhergehenden Ansprüche, **dadurch gekennzeichnet, dass** der Ladeluftkreis-Wärmetauscher (32) ein luftgekühlter Niedertemperatur-Wärmetauscher mit mehreren Pfaden ist.

6. Kühlsystem nach einem der vorhergehenden Ansprüche, **dadurch gekennzeichnet, dass** in den unteren Flüssigkeitssammelbereich des gemeinsamen Expansionsbehälters (36) wenigstens eine Füllleitung (38) mündet, die mit den beiden Kühlkreisen (10, 12) in Verbindung stehen.

7. Kühlsystem nach einem der vorhergehenden Ansprüche, **dadurch gekennzeichnet, dass** in den Ladeluftkühlkreis (12) ein Ölkühler (30) integriert ist.

8. Kühlsystem nach einem der vorhergehenden Ansprüche, **dadurch gekennzeichnet, dass** in dem Ladeluftkühlkreis (12) hintereinander die Ladeluftkreis-Kühlmittelpumpe (26), der Ladeluftkühler (28), ein Getriebeölkühler (30), gegebenenfalls weitere Kühler und schließlich der Ladeluftkreis-Wärmetauscher (32) angeordnet sind.

9. Kühlsystem nach einem der vorhergehenden Ansprüche, **dadurch gekennzeichnet, dass** die Ladeluftkreis-Kühlmittelpumpe (26) elektrisch angetrieben wird.
